(19)

Europäisches
Patentamt
European
Patent Office
Office européen
des brevets

(11) **EP 2 650 524 A2**

(12) **EUROPEAN PATENT APPLICATION**

(43) Date of publication:
**16.10.2013 Bulletin 2013/42**

(51) Int Cl.:
**F02M 25/07** *(2006.01)*

(21) Application number: **13163626.8**

(22) Date of filing: **12.04.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Park, Chan Woo**<br> **365-822 Chungcheongbuk-do (KR)**<br>• **Jung, Ki Ho**<br> **365-822 Chungcheongbuk-do (KR)**<br>• **Koo, Jung Suek**<br> **365-822 Chungcheongbuk-do (KR)** |
| (30) Priority: **12.04.2012 KR 20120037994**<br>**12.04.2012 KR 20120037995**<br>**26.09.2012 KR 20120107007** | (74) Representative: **Diehl & Partner GbR**<br>**Patentanwälte**<br>**Erika-Mann-Strasse 9**<br>**80636 München (DE)** |
| (71) Applicant: **Kamtec Inc.**<br>**Jincheon-gun, Chungbuk 365-822 (KR)** | |

(54) **Exhaust gas recirculation valve and method of manufacturing cam thereof**

(57)      An exhaust gas recirculation (EGR) valve with improved space efficiency, improved stability, and maximized driving force and a method of manufacturing cam thereof are disclosed. The EGR includes a housing, a drive motor to generate power, a power transmission unit connected to the drive motor to transmit the power generated by the drive motor, the power transmission unit comprising a plurality of gears, a rotary shaft connected to one of the gears constituting the power transmission unit, an actuating cam connected to the rotary shaft so as to move in a rotational direction of the rotary shaft, the actuating cam having a guide groove formed therein, and a valve member operatively connected to the actuating cam to selectively open and close an exhaust gas flow channel provided in the housing according to operation of the actuating cam, one end of the valve member being in contact with a top of the guide groove of the actuating cam such that the valve member is operated simultaneously when the actuating cam is rotated

FIG. 1

EP 2 650 524 A2

## Description

This application claims the benefit of Korean Patent Application No. 10- 2012- 0037994, filed on April 12, 2012, and No. 10- 2012- 0037995, filed on April 12, 2012 and No. 10- 2012- 0107007, filed on September 26, 2012, which are hereby incorporated by reference as if fully set forth herein.

## BACKGROUND OF THE INVENTION

### Field of the Invention

The present invention relates to an exhaust gas recirculation (EGR) valve and a method of manufacturing cam thereof, and more particularly, to an EGR valve with improved space efficiency, improved stability, and maximized driving force and a method of manufacturing cam thereof.

### Discussion of the Related Art

In order to suppress generation of nitrogen oxides (NOx) generated from exhaust gas discharged from an engine mounted in a vehicle, an exhaust gas recirculation (EGR) valve that supplies a portion of cooled exhaust gas to a mixer and then supplies the gas into a cylinder has been widely used in recent years.

The EGR valve includes a housing having an inlet port and an outlet port, an opening and closing device to selectively open and close the inlet port, and an actuator to operate the opening and closing device for reciprocation.

The inlet port of the housing is connected to an exhaust manifold of the engine and the outlet port of the housing is connected to an intake manifold of the engine. According to operation of the actuator and the opening and closing device, therefore, a portion of exhaust gas discharged from the exhaust manifold is selectively moved to the intake manifold by the EGR valve.

In the structure of the conventional EGR valve, a gear unit is provided between the actuator and the opening and closing device and recirculation of exhaust gas is performed according to operation of the gear unit.

In this case, the EGR valve includes an eccentric actuating cam and a valve member connected to the actuating cam. When the actuating cam is rotated, therefore, the valve member is moved upward and downward to selectively open and close an exhaust gas flow channel provided in the housing.

## SUMMARY OF THE INVENTION

Accordingly, the present invention is directed to an exhaust gas recirculation (EGR) valve and method of manufacturing cam thereof that substantially obviate one or more problems due to limitations and disadvantages of the related art.

An object of the present invention is to provide an exhaust gas recirculation (EGR) valve wherein driving force of the EGR valve is maximized, the size of the EGR valve is reduced into a compact size, and a drive motor of the EGR valve is protected from heat generated from exhaust gas and a method of manufacturing cam thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an EGR includes a housing, a drive motor to generate power, a power transmission unit connected to the drive motor to transmit the power generated by the drive motor, the power transmission unit comprising a plurality of gears, a rotary shaft connected to one of the gears constituting the power transmission unit, an actuating cam connected to the rotary shaft so as to move in a rotational direction of the rotary shaft, the actuating cam having a guide groove formed therein, and a valve member operatively connected to the actuating cam to selectively open and close an exhaust gas flow channel provided in the housing according to operation of the actuating cam, one end of the valve member being in contact with a top of the guide groove of the actuating cam such that the valve member is operated simultaneously when the actuating cam is rotated.

In another aspect of the present invention, a method of designing and manufacturing an actuating cam of an EGR valve including a plate part having a rotary shaft hole, in which a rotary shaft provided in a housing of the EGR valve is inserted, and a guide groove formed at the plate part such that a roller of a predetermined follower is inserted in the guide groove, the guide groove guiding movement of the roller, includes setting an original cam curve extending from a virtual vertical line vertically extending from a rotational center point of the actuating cam in a counterclockwise direction such that the original cam curve is gradually spaced apart from the rotational center point of the actuating cam, rotating the original cam curve by a predetermined angle in a clockwise direction, extracting a portion of the original cam curve and forming the extracted shape at the plate part to form the guide groove, wherein a contact position between the guide groove and the roller is linearly changed according to rotation of the actuating cam and a pressure angle of a contact point between the actuating cam and the roller is changed within a predetermined range.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view showing an exhaust gas recirculation (EGR) valve according to an embodiment of the present invention;

FIGs. 2 and 3 are exploded perspective views showing the EGR valve according to the embodiment of the present invention;

FIG. 4 is a view showing a state before an original cam curve, on which an actuating cam of the embodiment of the present invention is based, is rotated;

FIG. 5 is a view showing a state after the original cam curve, on which the actuating cam of the embodiment of the present invention is based, is rotated by a predetermined angle in a clockwise direction;

FIG. 6 is a view showing a state in which the actuating cam of the embodiment of the present invention and the original cam curve are overlapped;

FIG. 7 is a view showing a rotational state of the actuating cam of the embodiment of the present invention and change of a pressure angle according to the rotational state;

FIG. 8 is a graph showing change of a parameter value according to rotation of the original cam curve, on which the actuating cam of the embodiment of the present invention is based;

FIG. 9 is a graph showing change of a parameter value according to rotation of the original cam curve, on which the actuating cam of the embodiment of the present invention is based, and rotation of the actuating cam;

FIG. 10 is a graph showing change of a pressure angle according to rotation of the original cam curve, on which the actuating cam of the embodiment of the present invention is based, and rotation of the actuating cam;

FIG. 11 is a coupled perspective view showing a drive motor and a power transmission unit of the EGR valve according to the embodiment of the present invention;

FIG. 12 is a side view showing the drive motor and the power transmission unit of the EGR valve according to the embodiment of the present invention;

FIG. 13 is an exploded perspective view showing a housing of the EGR valve according to the embodiment of the present invention;

FIG. 14A is a perspective view showing a state in which a second gear and an elastic restoring member of the power transmission unit are coupled to each other;

FIG. 14B is a perspective view showing a state in which the housing and the elastic restoring member are coupled to each other;

FIG. 15A is a front view showing a state in which the second gear and the elastic restoring member of the power transmission unit are coupled to each other;

FIG. 15B is a front view showing a state in which the housing and the elastic restoring member are coupled to each other;

FIG. 16 is a perspective view showing an operational state of the EGR valve according to the embodiment of the present invention;

FIG. 17 is a view showing position of a contact roller according to rotation of the actuating cam of the EGR valve according to the embodiment of the present invention;

FIG. 18 is a view showing position of a contact roller according to rotation of an actuating cam of a conventional EGR valve;

FIG. 19 is a view showing an open and closed state of a valve unit according to rotation of the actuating cam of the embodiment of the present invention;

FIG. 20(a) is a graph showing a relationship between output voltage of a sensor and movement distance of a valve member in the conventional art; and

FIG. 20(b) is a graph showing a relationship between output voltage of a sensor and movement distance of a valve member in an embodiment of the present invention.

**DETAILED DESCRIPTION OF THE INVENTION**

Reference will now be made in detail to the preferred embodiments of the present invention, examples of which are illustrated in the accompanying drawings. Wherever possible, the same reference numbers will be used throughout the drawings to refer to the same or like parts.

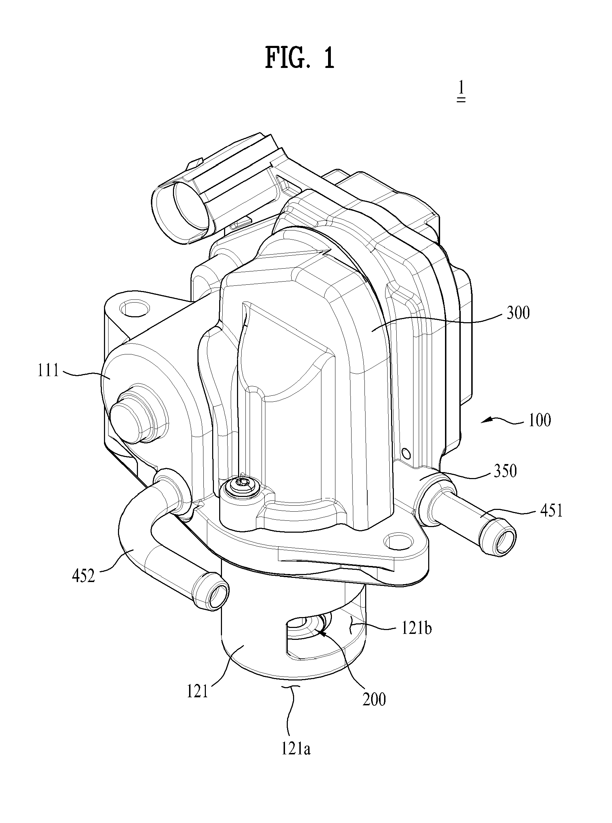

As shown in FIG. 1, an exhaust gas recirculation (EGR) valve 1 according to an embodiment of the present invention includes a housing 100.

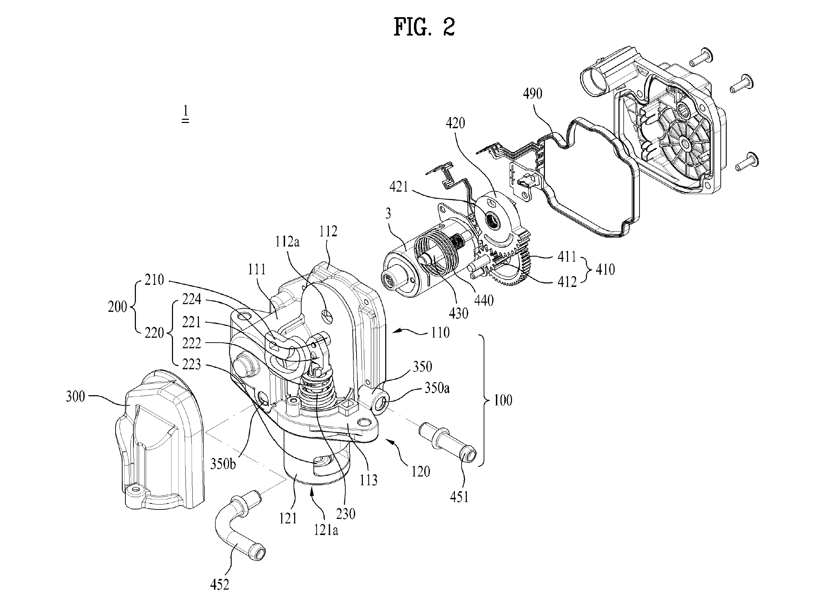

The housing 100 is provided at one side of the upper part thereof with a motor installation part 111, in which a drive motor 3 (see FIG. 2) is installed. The housing 100 is provided at the lower part thereof with an exhaust gas flow channel 121, through which exhaust gas flows.

The housing 100 has a valve unit 200. The valve unit 200 is covered by a valve cover 300 installed at the housing 100 such that the valve unit 200 is prevented from being exposed outward.

The valve unit 200 is installed in the exhaust gas flow channel 121 such that the valve unit 200 performs upward and downward movement with respect to the exhaust gas flow channel 121 to open and close the exhaust gas flow channel 121.

The housing 100 is provided at the lower part thereof with an inlet port 121a of the exhaust gas flow channel 121. The housing 100 is provided at one side of the lower part thereof with an outlet port 121b of the exhaust gas flow channel 121. Specifically, the outlet port 121b is provided at one side of the exhaust gas flow channel 121.

According to the upward and downward movement of the valve unit 200, communication between the inlet port 121a and the output port 121b of the exhaust gas flow channel 121 is selectively allowed or interrupted.

As will hereinafter be described, the valve unit 200 may be operated by power transmitted from the drive motor 3 (see FIG. 2) provided in the motor installation part 111.

The housing 100 is provided with a cooling fluid flow channel 350. The cooling fluid flow channel 350 guides flow of a cooling fluid, such as cooling water or cooling oil.

The cooling water or the cooling oil performs a heat dissipation function to prevent abrupt increase in temperature of the housing 100 due to exhaust gas flowing in gas flow channel 121.

If such a component performing a heat dissipation function is not provided, the drive motor 3, which is installed in the motor installation part 111, may be deteriorated due to heat with the result that the drive motor 3 may malfunction.

For this reason, the cooling fluid flow channel 350 may be disposed between the motor installation part 111 and the exhaust gas flow channel 121.

In an inlet port 401 and an outlet port 402 of the cooling fluid flow channel 350 are provided an inlet pipe 451 and an outlet pipe 452 to guide introduction and discharge of the cooling fluid into and from the cooling fluid flow channel 350.

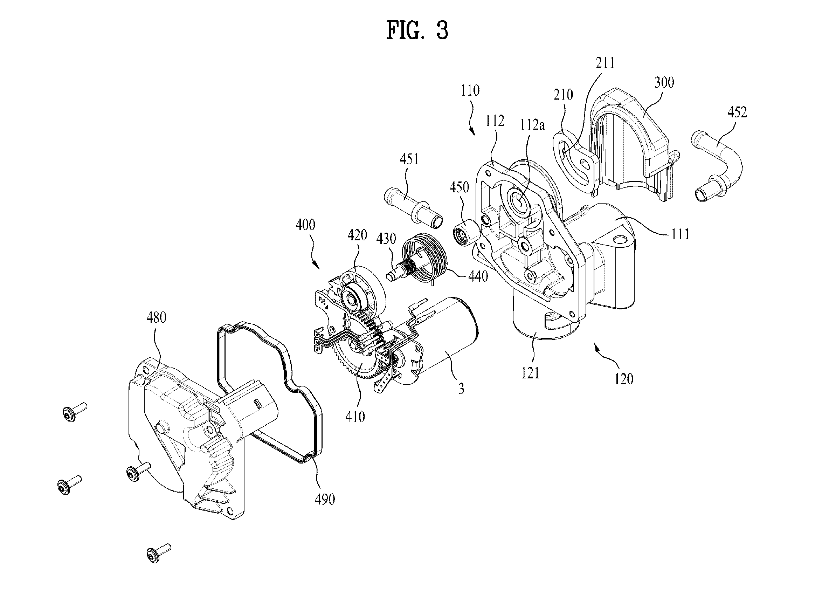

FIGs. 2 and 3 are exploded perspective views showing the EGR valve 1 according to the embodiment of the present invention.

FIG. 2 is an exploded perspective view of the EGR valve 1 when viewed in a first direction (forward), and FIG. 3 is an exploded perspective view of the EGR valve 1 when viewed in a second direction (backward) opposite to the first direction.

The housing 100 includes a first housing 110 and a second housing 120.

The first housing 110 is located at the upper part of the housing 100 and the second housing 110 is located at the lower part of the housing 100. The first housing 110 and the second housing 120 may be coupled to each other.

The motor installation part 111 is provided at one side of the first housing 110.

The valve unit 200 is installed adjacent to the motor installation part 111.

The valve unit 200 is disposed in the vertical direction. The motor installation part 111 and the drive motor 3 installed in the motor installation part 111 are disposed in the horizontal direction.

An installation plate 112, at which a rotary shaft 430 connected to the valve unit 200 is installed, is provided adjacent to the motor installation part 111. The installation plate 112 and the motor installation part 111 may be integrally formed.

The installation plate 112 and the motor installation part 111 are components of the first housing 110.

The valve unit 200 includes an actuating cam 210 connected to the rotary shaft 430 such that the actuating cam 210 can be rotated.

The valve unit 200 includes the actuating cam 210 and a valve member 220.

The valve member 220 includes an upper stem 221, a lower stem 222 connected to the upper stem 221, and a valve plate 223 provided at the lower end of the lower stem 222 to selectively close the inlet port 121a of the exhaust gas flow channel 121 provided in the housing 100.

A contact roller 224 is provided at one side of the upper part of the upper stem 221. The contact roller 224 is inserted in a guide groove 211 of the actuating cam 210.

When the actuating cam 210 is rotated, therefore, the contact roller 224 may move along the guide groove 211, thereby achieving relative movement between the contact roller 224 and the guide groove 211.

According to movement of the contact roller 224, the upper stem 221 moves upward and downward. As a result, the lower stem 222 and the valve plate 223 also move upward and downward to selectively open and close the inlet port 121a.

Meanwhile, the valve cover 300 to cover the valve unit 200 such that the valve unit 200 is prevented from being exposed outward is provided at the first housing 110.

The side of the valve cover 300 is installed at the installation plate 112 and the bottom of the valve cover 300 is installed at the bottom 113 of the first housing 110 to prevent the upper parts of the actuating cam 210, the upper stem 221, and the lower stem 222 from being exposed outward.

Meanwhile, a spring 230 is provided between the upper stem 221 and the bottom 113 of the first housing 110. The spring 230 may be a coil spring. The spring 230 may be disposed in the vertical direction.

The upper end of the spring 230 is located in contact with the lower end of the upper stem 221. The lower end of the spring 230 is located in contact with the first housing 110.

The spring 230 elastically supports the upper stem 221.

According to downward rotation of the actuating cam 210, the upper stem 221 moves downward. If power used to downwardly move the upper stem 221 is removed in a state in which the inlet port 121a is opened by the valve plate 223, the upper stem 221 moves upward due to elastic restoring force of the spring 230.

As a result, the valve plate 223 closes the inlet port 121a.

The drive motor 3 and the actuating cam 210 are connected to each other via a power transmission unit 400 including a plurality of gears.

The power transmission unit 400 includes a pinion gear 405 provided at a motor shaft 30 of the drive motor 3, a first gear 410 engaged with the pinion gear 405, and a second gear 420 engaged with the first gear 410.

The rotary shaft 430 connected to the actuating cam 210 is inserted and fixed in the rotational center of the second gear 420.

The first gear 410 may be a spur gear having a plurality of gear layers. A first gear layer 411 having a relatively large diameter is engaged with the pinion gear 405 and a second gear layer 412 having a relatively small diameter is engaged with the second gear 420.

The second gear 420 is provided at a portion of the outer circumference thereof with gear teeth, which correspond to rotational trajectory of the actuating cam 210.

The rotary shaft 430 connects the second gear 420 and the actuating cam 210 to each other.

The rotary shaft 430 is provided at the outer circumference thereof with a support boss 450 (see FIG. 3). The support boss 450 is installed in a through hole 112a of the installation plate 112 of the first housing 110 to rotatably support the rotary shaft 430

An elastic restoring member 440 is provided around the rotary shaft 430.

The elastic restoring member 440 is connected between the second gear 420 and the first housing 110.

The elastic restoring member 440 includes a coil-shaped body 441, a first end 442, and a second end 443.

The first end 442 is coupled to the second gear 420 and the second end 443 is coupled to the first housing 110.

The first end 442 is inserted and supported in a support hole 424 provided at the second gear 420.

The second end 443 is inserted and supported in a support groove 112b provided at the rear of the installation plate 112.

The second end 443 may extend downward in the shape of a straight line. However, embodiments of the present invention are not limited thereto. For example, the second end 443 may be bent.

A coupling relationship between the elastic restoring member 440 and the second gear 420 and a coupling relationship between the elastic restoring member 440 and the installation plate 112 will hereinafter be described in detail.

When the first and second gears 410 and 420 are rotated by the drive motor 3, the elastic restoring member 440 is twisted while having elastic restoring force. When the drive motor 3 malfunctions or the supply of power to the drive motor 3 is interrupted with the result that the rotational force is removed, the elastic restoring member 440 rotates the second gear 420 to the original state while returning into the original state due to the elastic restoring force.

As a result, the actuating cam 210 may be rotated to the original state.

At one side of the installation plate 112 is provided a protective cover 480 to cover the power transmission unit 400 and the drive motor 3.

Between the protective cover 480 and the installation plate 112 is provided a sealing member 490 to prevent introduction of external moisture or foreign matter.

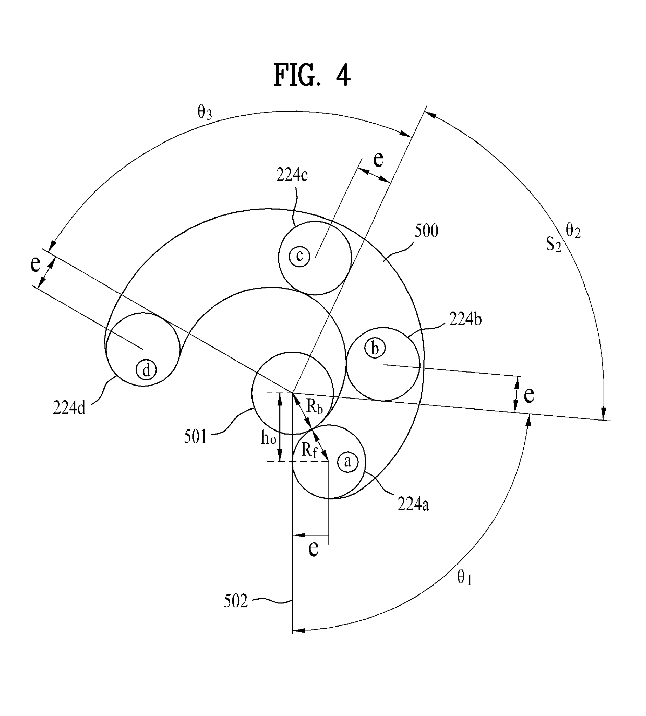

FIG. 4 is a view showing an original cam curve 500, on which an actuating cam 210 of the embodiment of the present invention is manufactured based.

The original cam curve 500 is configured such that a portion of the original cam curve 500 remains tangent to a virtual basic circle 501 located at the rotational center thereof, the original cam curve 500 extends in the counterclockwise direction, and the original cam curve 500 is gradually spaced apart from the basic circle 501 in the counterclockwise direction.

The front end of the original cam curve 500 is tangent to a virtual vertical line 502 vertically extending from the center of the basic circle 501.

The front end and the rear end of the original cam curve 500 are formed in the shape of a semicircular arc, which corresponds to the shape of the roller 224 (see FIG. 2).

However, the vertical height of the original cam curve 500 may be slightly greater than that of the roller 224 and the roller 224 may be tangent to the top of the original cam curve 500.

An x-axis directional distance between the center of a virtual roller 224a contacting the front end of the original cam curve 500 and the center of the basic circle 501 may be defined as an x-axis directional or horizontal eccentric distance e.

Also, a y- axis directional distance between the center of the virtual roller 224a contacting the front end of the original cam curve 500 and the center of the basic circle 501 may be defined as a y- axis directional or vertical eccentric distance $h_o$.

In FIG. 4, a circle denoted by ⓐ is a virtual roller 224a located at the forefront of the original cam curve 500. A circle denoted by ⓓ is a virtual roller 224d located at the rearmost of the original cam curve 500.

The guide groove 211 (see FIG. 2) of the actuating cam 210 (see FIG. 2) of the embodiment of the present invention is designed by rotating the original cam curve 500 by a predetermined angle in the clockwise direction, omitting a portion of the front part and a portion of the rear part of the original cam curve 500, and forming a predetermined actuation section $S_2$ and predetermined margin sections $S_1$ and $S_3$.

Symbol ⓑ indicates a virtual roller 224b located at the front end of the actuation section $S_2$ before the original cam curve 500 is rotated in the clockwise direction and symbol ⓒ indicates a virtual roller 224c located at the rear end of the actuation section $S_2$ before the original cam curve 500 is rotated in the clockwise direction.

An angle between ⓐ and ⓑ is defined as a first angle (or a first angle range) $\theta_1$ and an angle between ⓑ and ⓒ is defined as a second angle (or a second angle range) $\theta_2$.

Also, an angle between ⓒ and ⓓ is defined as a third angle (or a third angle range) $\theta_3$.

As will hereinafter be described, the second angle (or the second angle range) $\theta_2$ corresponds to the substantial actuation section S2 of the actuating cam 224.

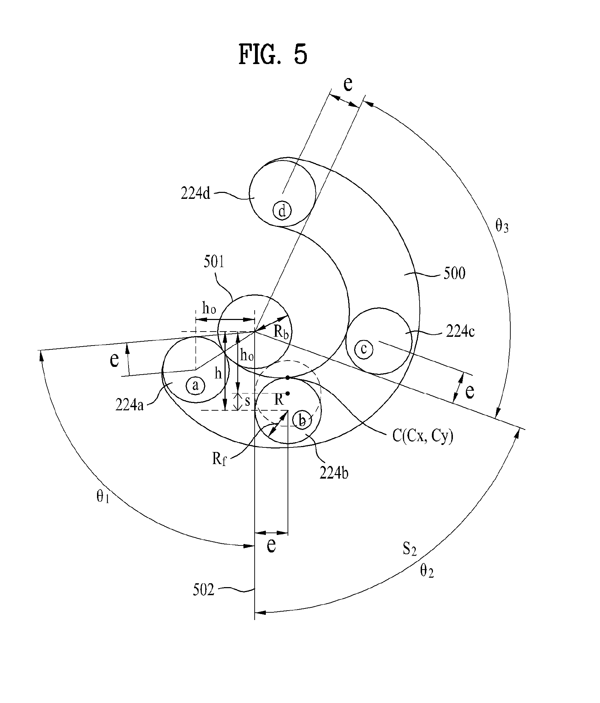

As shown in FIG. 5, the original cam curve 500 is rotated by the first angle (or the first angle range) $\theta_1$ in the clockwise direction.

In this state, the virtual line 502 vertically extending from the center of the basic circle 501 is tangent to the virtual roller 224b denoted by ⓑ.

Since the original cam curve 500 is gradually spaced apart from the basic circle 501 in the counterclockwise direction as previously described, the virtual roller 224b denoted by ⓑ is spaced apart from the basic circle 501.

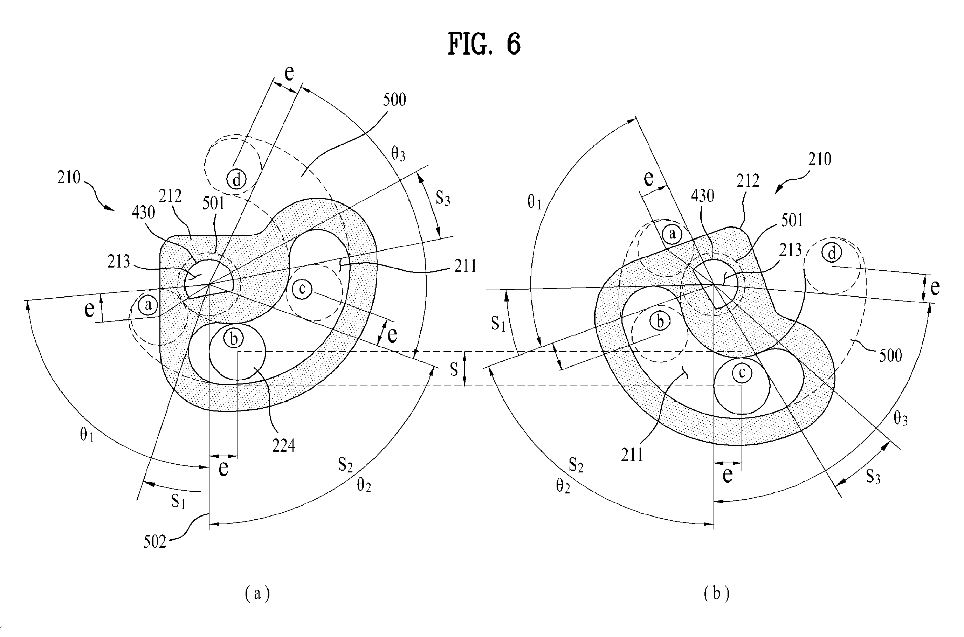

FIG. 6(a) shows that the guide groove 211 of the actuating cam 210 is formed using the residual cam curve obtained by omitting a portion of the front part and a portion of the rear part of the original cam curve 500 shown in FIG. 5.

The actuating cam 210 includes a plate part 212, a rotary shaft hole 213, in which the rotary shaft 430 (see FIG. 2) is inserted, provided at the rotational center of the plate part 212, and the guide groove 211 spaced apart from the rotary shaft hole 213.

In a state in which the actuating cam 210 is not operated by the drive motor 3 (see FIG. 2), the roller 224 may be located at position ⓑ at the front of the guide groove 211.

In this case, as previously described, the front end of the roller 224 is tangent to the virtual vertical line 502 vertically extending from the rotational center of the rotary shaft 430 (the center of the basic circle 501).

On the other hand, FIG. 6(b) shows a state in which the rotary shaft 430 is rotated by the drive motor 3 in the state of FIG. 6(a) with the result that the actuating cam 210 is rotated by the second angle (or the second angle range) $\theta_2$ in the clockwise direction.

At this time, the roller 224 is located at position ⓒ. Also, the front end of the roller 224 is tangent to the virtual vertical line 502 vertically extending from the rotational center of the rotary shaft 430 (the center of the basic circle 501).

As previously described, the section between ⓑ and ⓒ may be the substantial actuation section in which the actuating cam 210 can be rotated to open and close the valve unit 200 (see FIG. 2).

The section between position ⓑ and the forefront of the guide groove 211 and the section between position ⓒ and the rearmost of the guide groove 211 may be the margin sections $S_1$ and $S_3$, respectively.

The margin sections $S_1$ and $S_3$ are provided in consideration of unexpected excessive motion of the roller. In a case in which the actuating cam 210 is normally operated, the roller 224 does not contact the margin sections $S_1$ and $S_3$.

As will hereinafter be described, a state in which the valve unit 200 closes the exhaust gas flow channel 121 (see FIG. 2), i.e. a top dead point of the roller 224, may be realized in a state shown in FIG. 6(a).

On the other hand, a state in which the valve unit 200 moves downward to maximally open the exhaust gas flow channel 121, i.e. a bottom dead point of the roller 224, may be realized in a state shown in FIG. 6(b).

In FIGs. 4, 5, 6(a), and 6(b), on the assumption that $S_f$-fixed coordinate system $(X_f, Y_f)$ is fixed to the center point of the actuating cam and the height from the rotational center of the actuating cam 210 to the center point of the roller 224 and the distance from the rotational center of the actuating cam 210 to the center point of the roller 224 in the horizontal direction, i.e. eccentricity, are h and e, respectively, coordinates of the center point of the roller may be expressed as follows.

[Mathematical expression 1]

$$^fR_x = e$$

$$^fR_y = h = h_0 + s = \sqrt{(R_f + R_b)^2 - e^2} + s$$

Where, S indicates a stroke (displacement) when the roller 224 moves upward and downward.

On the assumption that the height from the rotational center of the actuating cam 210 to the center point of the roller 224 when the virtual roller 224 is tangent to the actuating cam 210 at position ⓐ in FIG. 4 is $h_o$, $h_o$ may be expressed as follows based on a geometrical relationship therebetween: $h_0 = \sqrt{(R_f + R_b)^2 - e^2}$.

Where, $R_b$ and $R_f$ indicate the radius of the basic circle 501 and the radius of the roller 224, respectively.

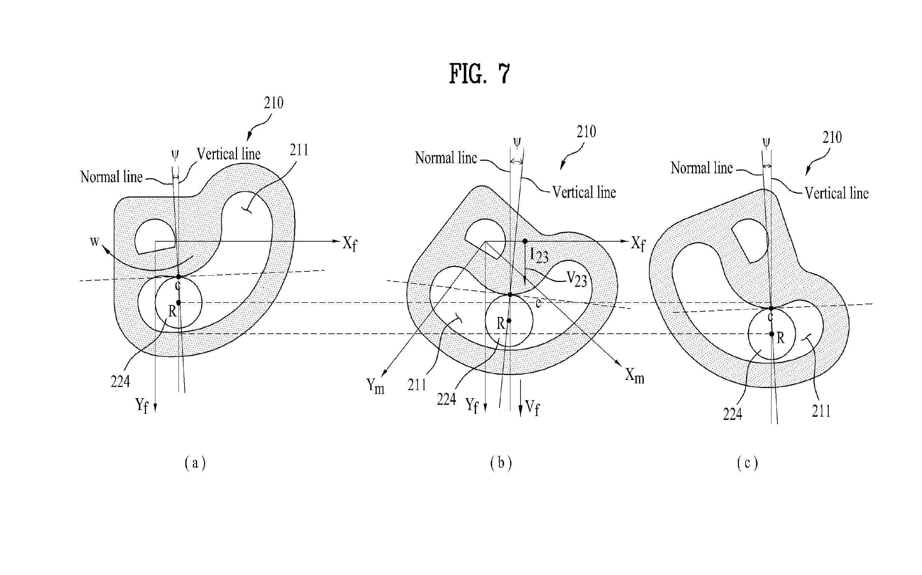

FIG. 7(a) is a view showing a state (initially set state) in which power is not transmitted to the actuating cam 210, FIG. 7(b) is a view showing a state in which the actuating cam 210 is rotated in the clockwise direction, and FIG. 7(c) is a view showing a maximally rotated state of the actuating cam 210.

In FIGs. 7(a) and 7(b), a contact point between the actuating cam 210 and the roller 224 when the actuating cam 210 is rotated about the rotation center thereof at angular velocity $\omega$ is defined as C.

A straight line connecting the center R of the roller 224 and the contact point C is a common normal line and instantaneous center of velocity $I_{23}$ is located on an extension of the common normal line.

At this time, three instantaneous centers of velocity R, C, and $I_{23}$ are located on the straight line (common normal line).

All instantaneous centers of velocity are located on the axis $X_f$ of the actuating cam 210 connected to the valve member 220, which is a follower of the roller 224.

Velocity $V_{23}$ at a pitch point and velocity $V_f$ at the center point of the roller may be expressed as follows.

[Mathematical expression 2]

$$V_{23} = Q\frac{d\theta}{dt}$$

$$V_f = \frac{dh}{dt} = \frac{dh}{d\theta}\frac{d\theta}{dt}$$

For an actuating cam performing translation, $V_{22} = V_f$. Consequently, the distance Q to the pitch point may be calculated as follows. Where, R indicates the center point of the roller.

[Mathematical expression 3]

$$Q = \overline{R\,I_{23}} = \frac{dh}{d\theta} = v$$

A contact angle $\psi$ may be expressed by the following equation using the coordinates of the center of the roller.

Also, a pressure angle $\alpha$ is an angle between the movement direction of the follower (valve member) and the common normal line. In a translation type actuating cam having a roller follower (valve member), therefore, the contact angle and the pressure angle have the same value.

[Mathematical expression 4]

$$\psi = \tan^{-1}\left(\frac{Q - {}^fR_x}{{}^fR_y}\right) = \alpha$$

As will hereinafter be described, the actuating cam 210 according to the embodiment of the present invention may have a range of pressure angle between - 4 and + 4 degrees such that generation of unnecessary side force from the actuating cam 210 is prevented and rotational force of the actuating cam 210 is transmitted upward and downward.

Contact points ${}^fC({}^fC_x,\ {}^fC_y)$ with respect to the $S_f$- coordinate system $(X_f, Y_f)$, which is a fixed coordinate system, may be expressed as follows using the contact angle $\psi$.

[Mathematical expression 5]

$$\begin{aligned} {}^fC_x &= {}^fR_x + R_f\sin\psi \\ {}^fC_y &= {}^fR_y - R_f\cos\psi \end{aligned}$$

Overall shape of the cam may be obtained by converting the coordinates of the contact point calculated using the above equation into a cam attached $S_m$-rotational coordinate system.

On the assumption that the quantity of rotation of the cam is $\theta$, therefore, contact points with respect to the $S_m$-coordinate system $(X_m, Y_m)$, which is a rotational coordinate system, may be expressed as follows.

[Mathematical expression 6]

$$\begin{aligned} {}^mC_x &= {}^fC_x\cos\theta_c + {}^fC_y\sin\theta_c \\ {}^mC_y &= -{}^fC_x\sin\theta_c + {}^fC_y\cos\theta_c \end{aligned}$$

When the cam is rotated in the counterclockwise direction, $\theta_c = \theta$. On the other hand, when the cam is rotated in the clockwise direction, $\theta_c = -\theta$. These may be expressed as follows using a determinant.

[Mathematical expression 7]

$$\begin{Bmatrix} {}^mC_x \\ {}^mC_y \end{Bmatrix} = \begin{bmatrix} \cos\theta_c & \sin\theta_c \\ -\sin\theta_c & \cos\theta_c \end{bmatrix} \begin{Bmatrix} {}^fC_x \\ {}^fC_y \end{Bmatrix}$$

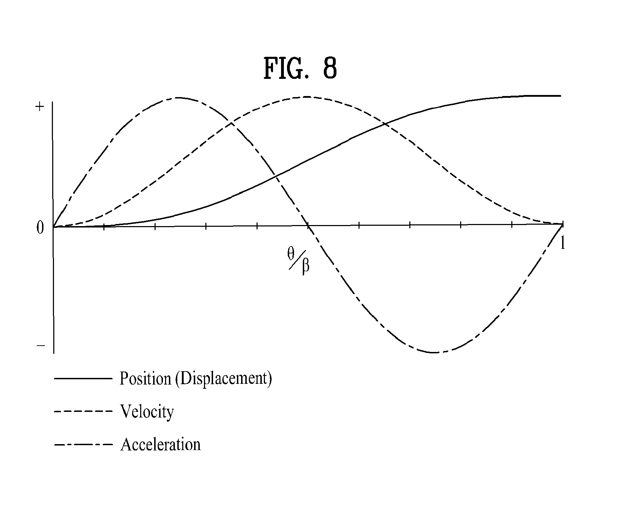

FIG. 8 is a graph showing change in displacement of the center, velocity and acceleration of the roller 244 connected to the original cam curve 500 before the original cam curve 500 is rotated by the first angle (or the first angle range) $\theta_1$ as shown in FIG. 4.

The change in displacement of the center R of the roller 224 is equal to that in height of the valve member 220 connected to the roller 224. This is because the roller 224 is designed so as to move upward and downward while rolling on the actuating cam 210 with the result that the valve member 220 also moves upward and downward.

The maximum displacement of the roller 224 due to the original cam curve 500 is decided as follows.

Physical meanings of parameters in mathematical expressions 8 to 10 below are as follows:

h = Maximum displacement

$\beta$ = Size of ascent and descent sections

$\theta$ = Quantity of rotation of cam in ascent and descent sections

$$0 \leq \frac{\theta}{\beta} \leq 1$$

Where, the maximum displacement means the maximum displacement difference of the follower, i.e. the valve member, according to rotation of the original cam curve.

Also, the size of ascent and descent sections means displacement when the valve member is actually moved.

First, upward and downward displacement according to rotation of the original cam curve is as follows:

[Mathematical expression 8]

$$y = h \left( \frac{\theta}{\beta} - \frac{1}{2\pi} \sin \frac{2\pi\theta}{\beta} \right)$$

Also, velocity of the original cam curve is as follows:

[Mathematical expression 9]

$$y' = \frac{h}{\beta} \left( 1 - \cos \frac{2\pi\theta}{\beta} \right)$$

In addition, acceleration of the original cam curve is as follows:

[Mathematical expression 10]

$$y'' = \frac{2\pi h}{\beta^2} \sin \frac{2\pi\theta}{\beta}$$

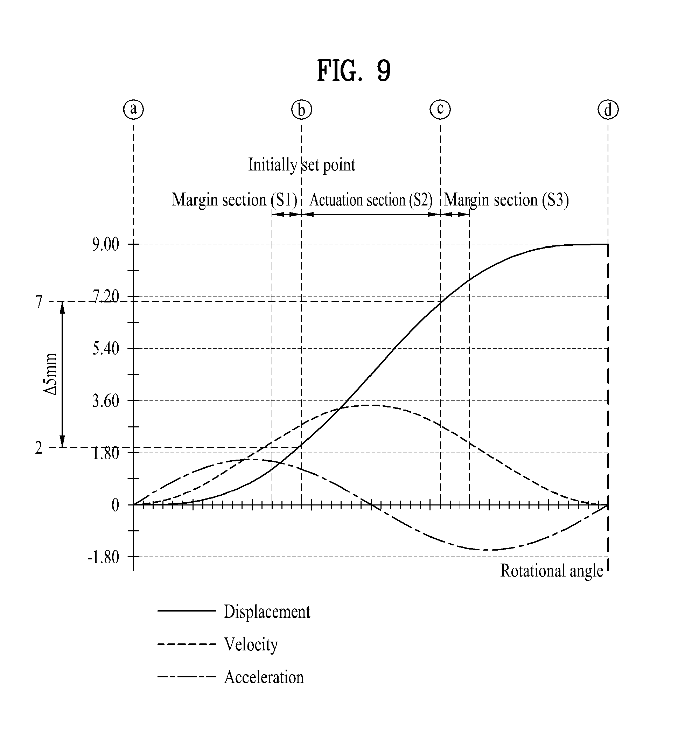

FIG. 9 is a graph showing change in displacement of the center point of the roller and velocity and acceleration of the roller in the actuation section during rotation of the actuating cam 210.

ⓐ, ⓑ, ⓒ, and ⓓ indicate positions of the virtual roller 224 disposed on the cam curve shown in FIG. 4.

It is assumed that in a case in which the roller 224 is located at position ⓐ, the center point of the roller is 0. When the roller 224 is located at position ⓑ, i.e. a start point of the substantial actuation section $S_2$, the center point of the roller is lowered by 2 mm.

Also, when the roller 224 is located at position ⓒ, i.e. an end point of the substantial actuation section $S_2$, the center point of the roller is lowered by 7 mm. This means that the height difference between ⓑ and ⓒ is 5 mm.

Also, when the roller 224 is located at position ⓓ, the center point of the roller is lowered by 9 mm from the initial position ⓐ. When the roller performs relative rotational motion in the section between ⓐ and ⓓ, therefore, the maximum displacement is 9 mm.

On the other hand, when the roller performs relative rotational motion in the section between ⓑ and ⓒ, which is the substantial actuation section, the displacement may be 5 mm.

Consequently, a ratio of the maximum displacement to the displacement in the substantial actuation section may be 9: 5. However, embodiments of the present invention are not limited thereto. For example, a ratio of the maximum displacement to the displacement in the substantial actuation section may be 8: 5 to 9: 5.

The reason that a ratio of the maximum displacement to the displacement in the substantial actuation section is not 1:1 is as follows:

The displacement in the section between ⓐ and ⓑ and the displacement in the section between ⓒ and ⓓ are changed in a curved shape. That is, the displacement is nonlinearly changed according to rotation of the actuating cam. As a result, it may be difficult to adjust the introduction amount of exhaust gas.

In the section between ⓑ and ⓒ, on the other hand, the displacement may be changed in the shape of an inclined straight line. That is, the displacement may be linearly changed according to rotation of the actuating cam.

Consequently, the opening degree of the valve member may be linearly adjusted, and therefore, it may be possible to easily adjust the introduction amount of exhaust gas.

In particular, the margin sections correspond to the section between ⓐ and ⓑ and the section between ⓒ and ⓓ. As shown in the graph, the displacement of the center point of the roller is nonlinearly changed in the margin sections. Therefore, the margin sections may be excluded from the substantial actuation section.

Since the original cam curve 500 has the nonlinear sections in which the displacement of the center point of the roller is nonlinearly changed and the linear section in which the displacement of the center point of the roller is linearly changed as described above, it may be necessary to extract the linear section from the overall section and to apply the extracted linear section to the guide groove of the actuating cam.

For this reason, a ratio of the maximum displacement in the overall section of the original cam curve 500 to the displacement in the extracted linear section of the original cam curve 500 may be 9:5 to 8:5.

An angle of the section between ⓐ and ⓑ is defined as a first angle (or a first angle range) $\theta_1$ as shown in FIG. 5, an angle of the section between ⓑ and ⓒ is defined as a second angle (or a second angle range) $\theta_2$ as shown in FIG. 5, and an angle of the section between ⓒ and ⓓ is defined as a third angle (or a third angle range) $\theta_3$ as shown in FIG. 5.

A graph of FIG. 9 shows change of displacement based on the original cam curve before rotation shown in FIG. 5. A graph showing change of the center point of the roller moved along the guide groove extracted from the original cam curve after rotation shown in FIGs. 7(a) and 7(b) may be obtained by lowering the graph of FIG. 9 by 2 mm.

That is, in FIGs. 6(a) and 6(b), the position of the roller at position ⓑ is the original and position ⓒ is a possible maximum displacement position.

Meanwhile, in the actuation section (section between ⓑ and ⓒ), rotational velocity of the actuating cam is increased, reaches to the maximum velocity, and is then decreased.

Also, in the actuation section (section between ⓑ and ⓒ), rotational acceleration of the actuating cam is continuously decreased from the start point to the end point of the actuation section.

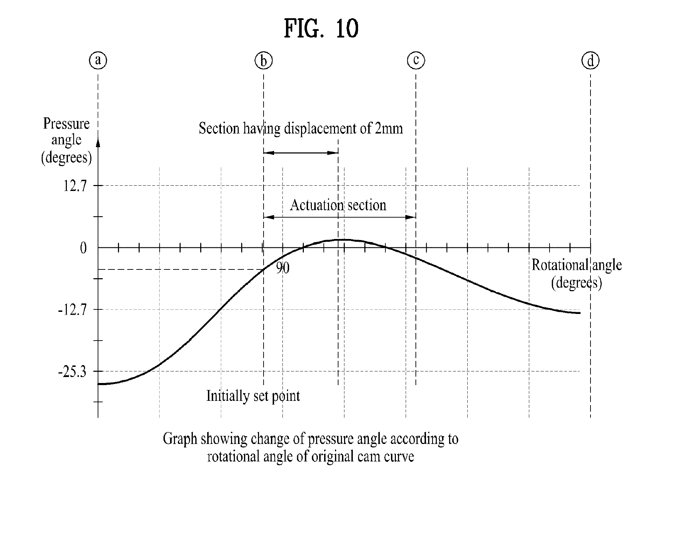

FIG. 10 is a graph showing change of a pressure angle between the roller 224 and the inside of the guide groove 211 of the actuating cam 210 when the original cam curve 500 is rotated.

In the actuation section (section between ⓑ and ⓒ), the pressure angle is between about - 4 and + 4 degrees. However, the pressure angle is negative (-) at position ⓑ, i.e. the start point of the actuation section, and position ⓒ, i.e. the end point of the actuation section, and the maximum pressure angle is present in the section between ⓑ and ⓒ.

The pressure angle is maximized when the actuating cam 210 is rotated such that the center point of the roller is changed by about 2 mm from position ⓑ.

According to the embodiment of the present invention as described above, the pressure angle between the roller and the actuating cam is restricted. Force is applied to the roller 224 as the result of relative motion between the roller 224 and the actuating cam 210. At this time, the force includes a vertical force component and a horizontal force component.

When the pressure angle is restricted according to the embodiment of the present invention, the horizontal force component may be minimized and the vertical force component may be maximized. As a result, the valve member 220 may be moved upward and downward.

Consequently, loss in force of the drive motor to rotate the actuating cam 210 may be minimized. Meanwhile, in the embodiment of the present invention, the substantial actuation section of the actuating cam 210 does not correspond to the entirety of the original cam curve 500 but an extracted portion of the original cam curve 500.

Change in vertical displacement of the follower connected to the original cam curve 500 includes non-linear change portions and a linear change portion. In the embodiment of the present invention, the linear change portion is extracted such that the extracted linear change portion corresponds to the actuation section of the actuating cam 210.

Consequently, it is possible to predictably adjust the opening degree of the exhaust gas flow channel and gas flow rate.

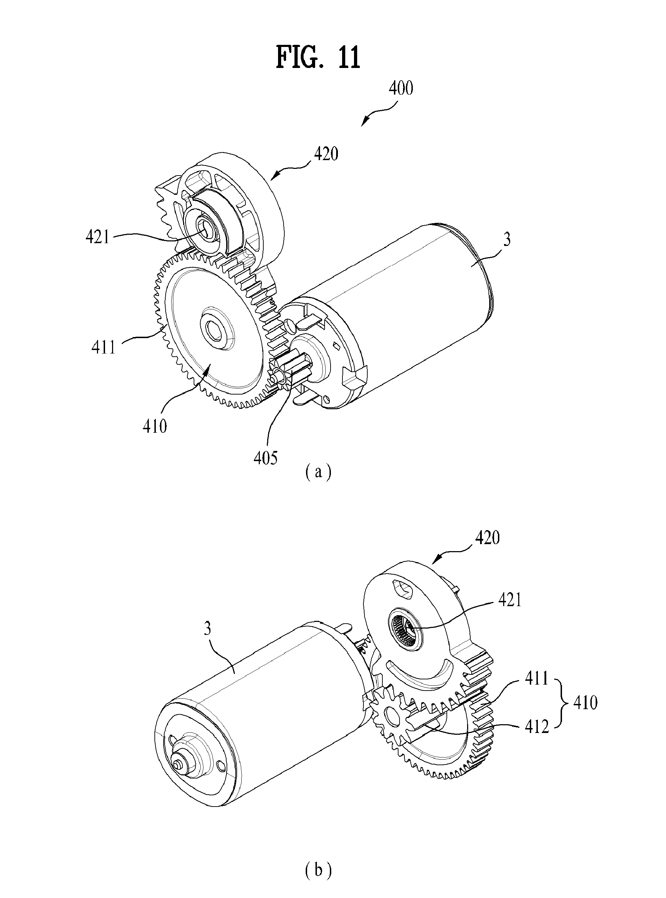

As shown in FIGs. 11(a) and 11(b), the drive motor 3 is provided at the side of one of the gears constituting the power transmission unit 400.

As compared with a conventional EGR valve in which the drive motor is disposed in an axial direction of the gears constituting the power transmission unit, a disposition space for the drive motor in the forward and backward direction may be considerably reduced.

When the drive motor is disposed as described above in consideration of the volume of the housing to enclose the driving motor, it may be possible to reduce the length of the housing in the forward and backward direction.

The pinion gear 405 is provided at the motor shaft of the drive motor 3.

The pinion gear 405 may be engaged with the first gear layer 411 of the first gear 410.

The second gear layer 412 having a smaller diameter than the first gear layer 411 is provided at one side of the first gear layer 411.

The second gear 420 is engaged with the second gear layer 412. As previously described, the second gear 420 is provided at a portion of the outer circumference thereof with gear teeth, at which the second gear 420 is engaged with the second gear layer 412.

An insertion hole 421 is provided at the rotational center of the second gear 420. The rotary shaft 430 connected to the actuating cam 210 is inserted and fixed in the insertion hole 421.

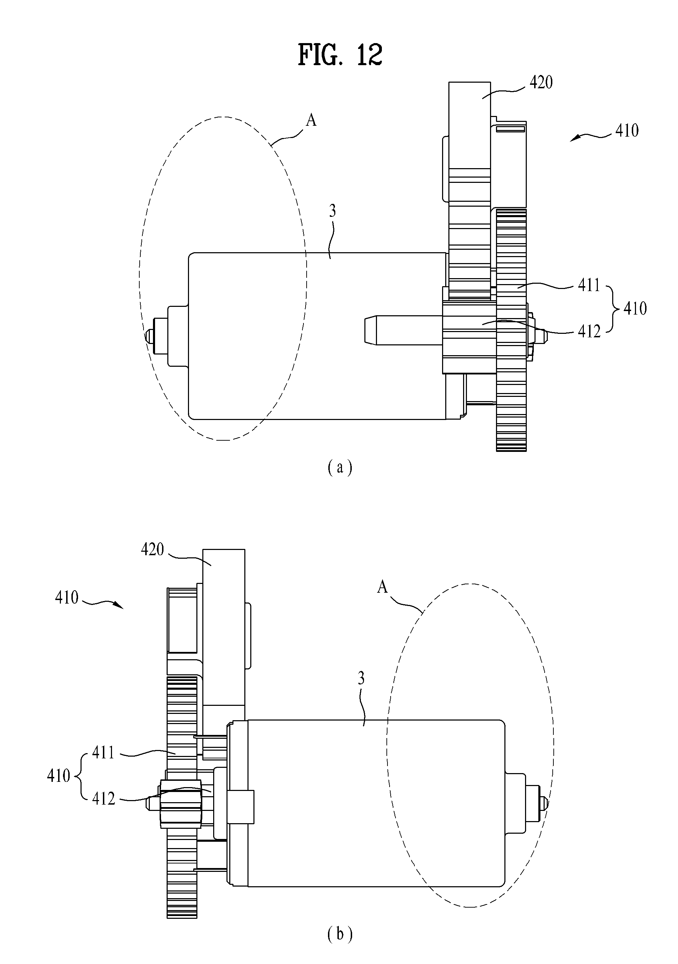

FIGs. 12 (a) and 12 (b) are left and right side views showing a state in which the drive motor 3 and the power transmission unit 400 are connected to each other.

As shown in FIGs. 12(a) and 12(b), the drive motor 3 and the power transmission unit 400 may overlap each other to some extent when viewed from the side.

In the conventional art, as previously described, the power transmission unit and the drive motor are connected to each other in the shape of a straight line with the result that a space to secure such a length is necessary. In the embodiment of the present invention, on the other hand, the disposition length may be reduced by the overlapping space.

Meanwhile, the drive motor 3 protrudes more outward than the power transmission unit 400. The valve unit 200 (see FIG. 2) and the valve cover 300 (see FIG. 2) may be installed in a side space A of the protruding drive motor 3.

In the conventional art, the valve unit and the valve cover are considerably spaced apart from the drive motor. In the embodiment of the present invention, on the other hand, the valve unit 200 and the valve cover 300 are disposed at the side of the drive motor 3 in parallel, thereby improving space efficiency.

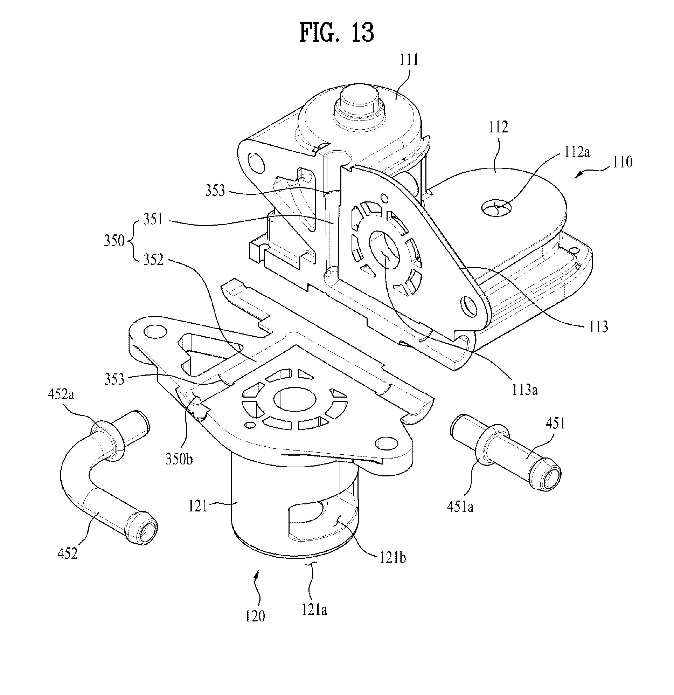

As shown in FIG. 13, the housing 100 includes the first housing 110, in which the motor installation part 111 and the installation plate 112 are provided, and the second housing 120 coupled to the bottom 113 of the first housing 110. The exhaust gas flow channel 121 is defined in the second housing 120.

The first housing 110 is provided at the bottom 113 thereof with a through hole 113a communicating with the exhaust gas flow channel 121. The valve unit 200 extends through the through hole 113a.

The cooling fluid flow channel 350 is provided at the bottom 113 of the first housing 110 and the top of the second housing 120 in the shape of a groove.

Hereinafter, the cooling fluid flow channel 350 is provided at the bottom of the first housing 110 will be referred to as a first cooling fluid flow channel 351 and cooling fluid flow channel 350 provided at the top of the second housing 120 will be referred to as a second cooling fluid flow channel 352 for the sake of convenience.

In a case in which the bottom of the first housing 110 and the top of the second housing 120 are coupled to each other in surface contact, the first cooling fluid flow channel 351 and the second cooling fluid flow channel 352 are disposed one above another to constitute the cooling fluid flow channel 350 which is formed in a tubular shape.

The cooling fluid flow channel 350 is provided so as to enclose the exhaust gas flow channel 121. The cooling fluid flow channel 350 may be bent in the housing 110.

The cooling fluid flow channel 350 may be provided between the motor installation part 111 and the exhaust gas flow channel 121. Consequently, heat generated from hot exhaust gas flowing along the exhaust gas flow channel 121 may be transferred to the cooling water or the cooling oil flowing along the cooling fluid flow channel 350. As a result, the heat may be discharged outside.

Consequently, the drive motor 3, which is installed in the motor installation part 111, may be prevented from malfunctioning due to heat generated from hot exhaust gas.

The inlet pipe 451 and the outlet pipe 452 are provided in the inlet port 350a and the outlet port 350b of the cooling fluid flow channel 350, respectively.

Step parts 353 are formed adjacent to the inlet port 350a and the outlet port 350b of the cooling fluid flow channel 350 such that the inlet pipe 451 and the outlet pipe 452 are easily inserted and disposed in the inlet port 350a and the outlet port 350b of the cooling fluid flow channel 350 via the step parts 353.

Meanwhile, the inlet pipe 451 and the outlet pipe 452 are provided at outer circumferences thereof with protrusions 451a and 452a. The protrusions 451a and 452a may be disposed in contact with edges of the inlet pipe 451 and the outlet pipe 452. Consequently, the inlet pipe 451 and the outlet pipe 452 are prevented from being inserted by more than a predetermined depth.

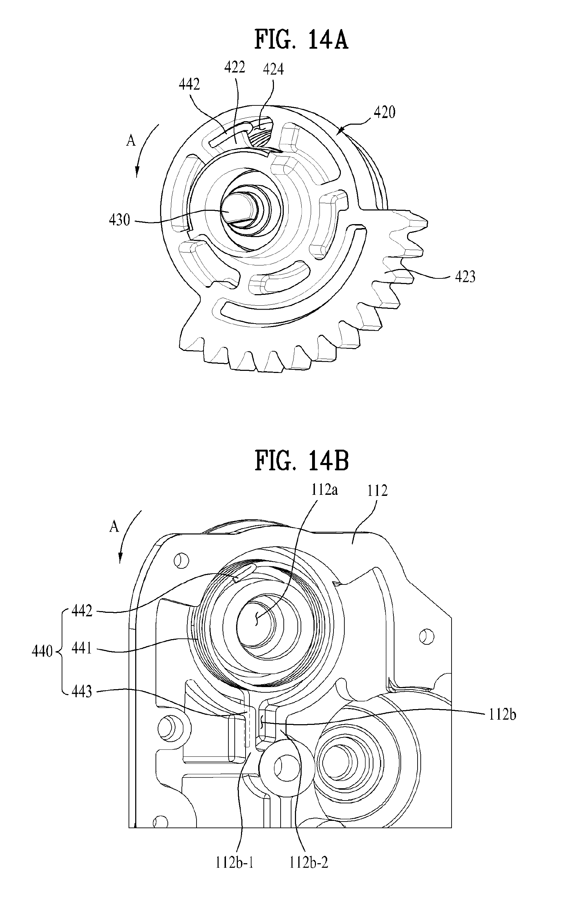

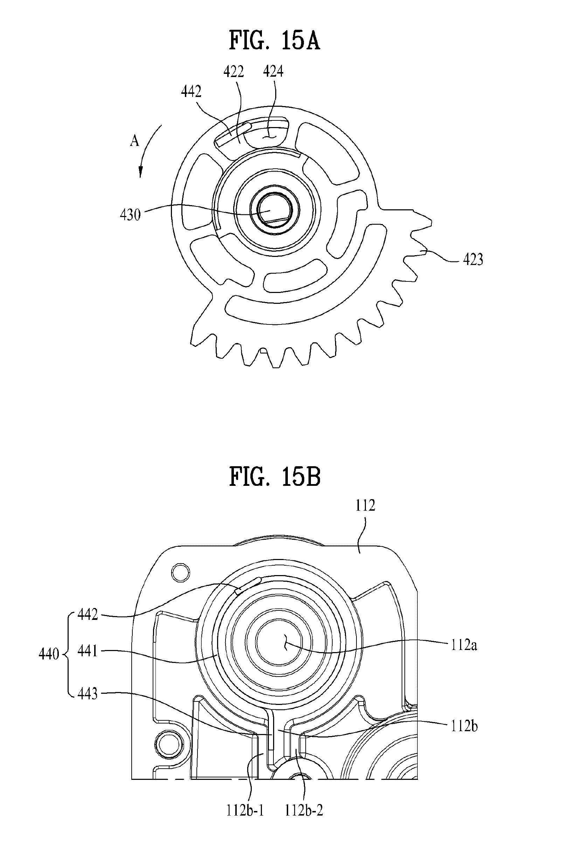

FIGs. 14 and 15 are views showing a state in which the elastic restoring member 440 and the second gear 420 are coupled to each other.

The support hole 424 is formed at the second gear 420. A catching protrusion 422 to catch the first end 442 of the elastic restoring member 440 is provided adjacent to the support hole 424.

The first end 442 is formed in the shape of a hook such that the first end 442 encloses the catching protrusion 422.

A direction A in which the first end 442 is caught is identical to a direction in which the actuating cam 210 (see FIG. 2) is rotated downward.

In a case in which the direction in which the first end 442 is caught is identical to the direction in which the actuating cam 210 (see FIG. 2) is rotated downward as described above, downward rotational force may be applied to the actuating cam 210 due to elastic support force of the elastic restoring member 440.

The actuating cam 210 and the second gear 420 are connected to each other via the rotary shaft 430. When force is applied to the second gear 420 in the direction A, therefore, force is also applied to the actuating cam 210 in the same direction.

Meanwhile, the second gear 420 is provided at the lower part thereof with gear teeth 423. The support hole 424 may be located opposite to the gear teeth.

As shown in FIG. 14(b), the elastic restoring member 440 is installed at the rear of the installation plate 112.

The support groove 112b is provided adjacent to the through hole 112a of the installation plate 112 such that the elastic restoring member 440 is installed and supported in the support groove 112b.

The support groove 112b surrounds the through hole 112a. A portion of the support groove 112b extends downward by a predetermined length.

The support groove 112b extending downward by the predetermined length includes a first side wall 112b-1 and a second side wall 112b-2.

The first side wall 112b-1 is provided closer in the direction in which the actuating cam 210 (see FIG. 2) is rotated downward (direction A) than the second side wall 112b-2.

The second end 443 of the elastic restoring member 440 is inserted and supported in the support groove 112b. In addition, the second end 443 of the elastic restoring member 440 is supported by the first side wall 112b-1.

That is, a direction in which the second end 443 is supported is identical to a direction in which the first end 442 is directed. In this structure, force may be applied to the second gear 420 while the second gear 420 is elastically supported by the elastic restoring member 440 in the direction A.

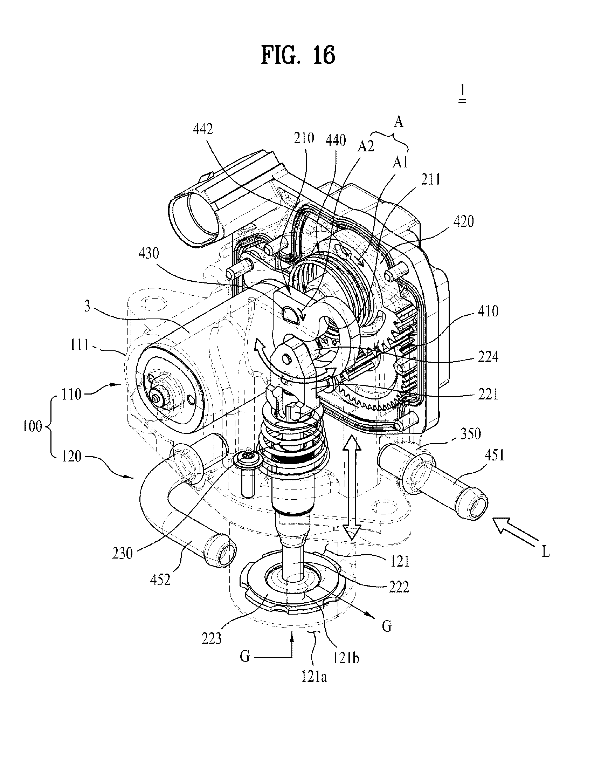

In a case in which exhaust gas is discharged from an exhaust manifold of an engine as shown in FIG. 16, it may be necessary for the valve unit 200 to close the inlet port 121a of the housing 100 such that the exhaust gas is discharged outside.

In this case, power is not supplied to the drive motor 3 and the first and second gears 410 and 420 are not rotated.

Also, the contact roller 224 is disposed adjacent to the left end of the guide groove 211 in the actuating cam 210.

The spring 230 pushes the upper stem 221 upward. As a result, upward force is applied to the lower stem 222 connected to the upper stem 221 and the valve plate 233 connected to the lower stem 222.

As the upward force is applied to the valve plate 233, the inlet port 121a of the exhaust gas flow channel 121 provided at the lower part of the housing 100 is closed.

Consequently, the exhaust gas discharged from the engine is not introduced into the housing 100 but is discharged from a vehicle along another flow channel.

On the other hand, the inlet port 121a of the exhaust gas flow channel 121 may be opened such that the exhaust gas G is introduced into the engine.

In this case, the drive motor 3 is turned on, the first and second gears 410 and 420 are rotated in a direction A1, and the actuating cam 210 connected to the first and second gears 410 and 420 via the rotary shaft 430 is rotated in a direction A2.

As a result, the contact roller 224 connected to the upper stem 221 rolls along the guide groove 21 of the actuating cam 210 while moving relative to the guide groove 211.

As the actuating cam 210 is rotated downward in the direction A1 (the clockwise direction on the basis of the front), the top of the guide groove 211 of the actuating cam 210 pushes the contact roller 224 downward. As a result, the upper stem 221, the lower stem 222, and the valve plate 223 are moved downward.

Consequently, the inlet port 121a of the exhaust gas flow channel 121 is opened, and the exhaust gas G is introduced into the open inlet port 121a. Subsequently, the exhaust gas G is discharged through the discharge port 121b of the exhaust gas flow channel 121 and flows to an intake manifold of the engine.

When recirculation of the exhaust gas is not necessary, the drive motor 3 is turned off.

In this case, the compressed spring 230 pushes the upper stem 221 upward. As a result, the lower stem 222

and the valve plate 223 are moved upward to close the inlet port 121a of the exhaust gas flow channel 121.

As the same time, the actuating cam 211 is rotated in the counterclockwise direction (direction opposite to direction A1).

When a cooling fluid L is introduced into the inlet pipe 451, on the other hand, the cooling fluid L flows along the cooling fluid flow channel 350 and is discharged to the outlet pipe 452.

The cooling fluid flow channel 350, provided between the inlet pipe 451 and the outlet pipe 452, is disposed so as to enclose the upper part of the exhaust gas flow channel 121. Also, the cooling fluid flow channel 350 is disposed between the exhaust gas flow channel 121 and the motor installation part 111 to prevent or suppress heat around the exhaust gas flow channel 121 from being transferred to the motor installation part 111.

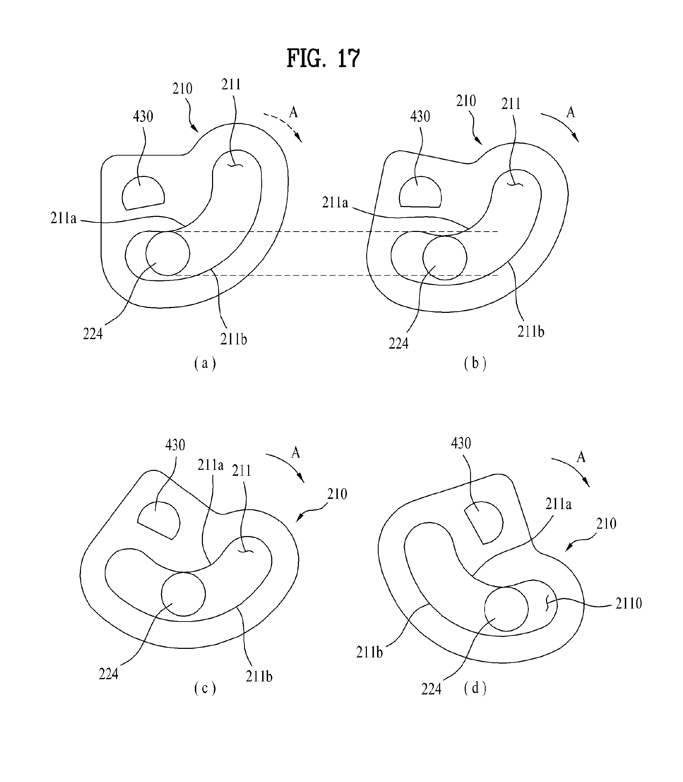

FIG. 17 is a view showing change in position between the contact roller 224 and the guide groove 211 according to rotation of the actuating cam 210.

FIG. 17(a) shows an initial state in which power from the drive motor 3 (see FIG. 2) is not supplied to the actuating cam 210.

Even in a state in which power from the drive motor 3 is not supplied to the actuating cam 210, force from the elastic restoring member 440 (see FIG. 16) is applied to the actuating cam 210 with the result that the actuating cam 210 is apt to rotate downward.

However, the actuating cam 210 does not substantially rotate downward since the valve member 220 (see FIG. 16) connected to the actuating cam 210 is elastically supported upward by the spring 230 (see FIG. 16) .

However, the actuating cam 210 contacts the contact roller 224 since the actuating cam 210 is apt to rotate in the direction A.

Specifically, the top 211a of the guide groove 211 contacts the contact roller 224 to push the contact roller 224 downward.

FIG. 17 (b) shows a state in which power is supplied to the drive motor 3 (see FIG. 2) in the state shown in FIG. 17(a) and the actuating cam 210 starts to rotate downward in the direction A.

When the actuating cam 210 starts to rotate downward in the direction A as shown in FIG. 17 (b) in a state in which the top 211a of the guide groove 211 is in contact with the contact roller 224 as shown in FIG. 17(a), the top 211a of the guide groove 211 pushes the contact roller 224 downward such that the contact roller 224 is moved downward.

The difference between the height of the contact roller 224 shown in FIG. 17(a) and the height of the contact roller 224 shown in FIG. 17(b) is great.

As the actuating cam 210 continues to rotate downward, the top 211a of the guide groove 211 pushes the contact roller 224 downward as shown in FIGs. 17(c) and 17(d). As a result, the contact roller 224 is continuously moved downward.

Since the actuating cam 210 rotates eccentrically about the rotary shaft 430, the contact roller 224 is moved downward as the actuating cam 210 is rotated in the direction A.

As the contact roller 224 is moved downward, the valve member 220 (see FIG. 16) is also moved downward to open the inlet port 121a.

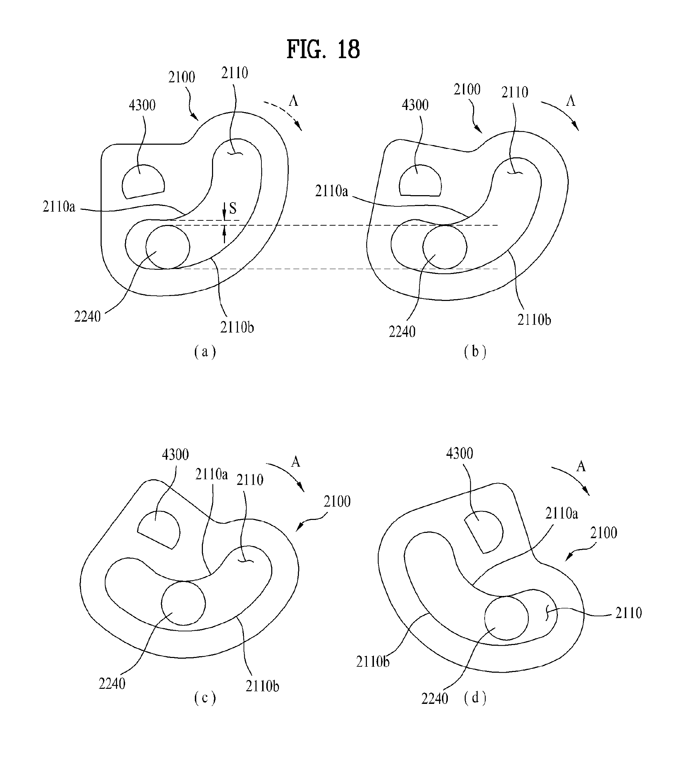

FIG. 18 is a view showing a relationship between a guide groove 2110 and a contact roller 2240 according to rotation of an actuating cam 2100 of a conventional EGR valve comparable with the valve according to the embodiment of the present invention.

An elastic restoring member is provided in the conventional EGR valve. The elastic restoring member has an influence on the actuating cam 2100.

However, the conventional elastic restoring member applies force to the actuating cam 2100 in an upward rotation direction (direction B) unlike the embodiment of the present invention.

Consequently, the contact roller 2240 comes into contact with a lower wall 2110b of the guide groove 2110 formed at the actuating cam 2100 and is spaced apart from an upper wall 2110a by a predetermined distance S.

Unless power from a drive motor is transmitted to the actuating cam 2100, the contact between the contact roller 2240 and the lower wall 2110b of the guide groove 2110 is maintained.

When the drive motor is turned on in the contact state, the actuating cam 2100 is rotated downward (in a direction A).

In the initial state, however, the contact roller 2240 is spaced apart from the upper wall 2110a by the predetermined distance. Even though the actuating cam 2100 is rotated, therefore, the position of the contact roller 2240 is not changed until the contact roller 2240 comes into contact with the upper wall 2110a.

That is, the height of the contact roller 2240 shown in FIG. 18(a) and the height of the contact roller 2240 shown in FIG. 18 (b) are the same even though the actuating cam 2100 is rotated.

In other words, the actuating cam 2100 is not rotated to open and close a gas flow channel, which leads to energy consumption.

As the contact roller 2240 contacts the upper wall 2110a of the guide groove 2110 and then the actuating cam 2100 is rotated downward in the direction A as shown in FIG. 18(b), the upper wall 2110a of the guide groove 2110 pushes the contact roller 2240 downward with the result  that the contact roller 2240 is moved downward as shown in FIGs. 18(c) and 18(d).

As the contact roller 2240 is moved downward, a valve unit is also moved downward to open an inlet port of the gas flow channel.

In comparison between FIGs. 17 and 18, the following difference is derived. In the embodiment of the present invention as shown in FIG. 17, the actuating cam 210 is rotated downward and, at the same time, the contact roller 224 starts to move downward with to immediately open the valve member 220. In the conventional art as shown in FIG. 18, however, the contact roller 2240 is temporarily moved downward even though the actuating cam 2100 is rotated.

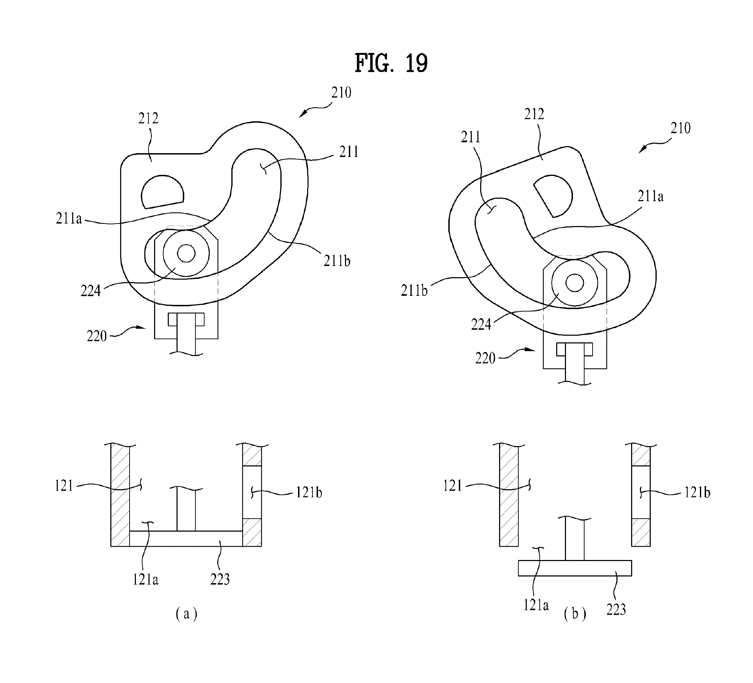

FIG. 19 is a view showing the operation of the valve unit 200 according to rotation of the actuating cam 210.

FIG. 19 (a) shows a state in which power is not transmitted to the actuating cam 210 and a state in which the valve unit 200 is closed according thereto and FIG. 19(b) shows a state in which the actuating cam 210 has been maximally rotated over the actuation section in the clockwise direction and a state in which the valve unit 200 is maximally opened according thereto.

In a state in which power is not transmitted to the actuating cam 210 as shown in FIG. 19(a), the contact roller 224 remains in contact with the upper wall 211a of the guide groove 211.

As this time, the valve plate 223 still closes the inlet port 121a of the exhaust gas flow channel 121.

When rotational force is transmitted to the actuating cam 210 in this state and the actuating cam 210 is rotated downward, the upper wall 211a of the guide groove 211 pushes the contact roller 224 downward.

As a result, relative movement is performed between the contact roller 224 and the upper wall 211a, and the valve member 220 is moved downward according to the downward movement of the contact roller 224.

Consequently, the valve plate 223 is moved farther downward than the inlet port 121a to open the inlet port 121a.

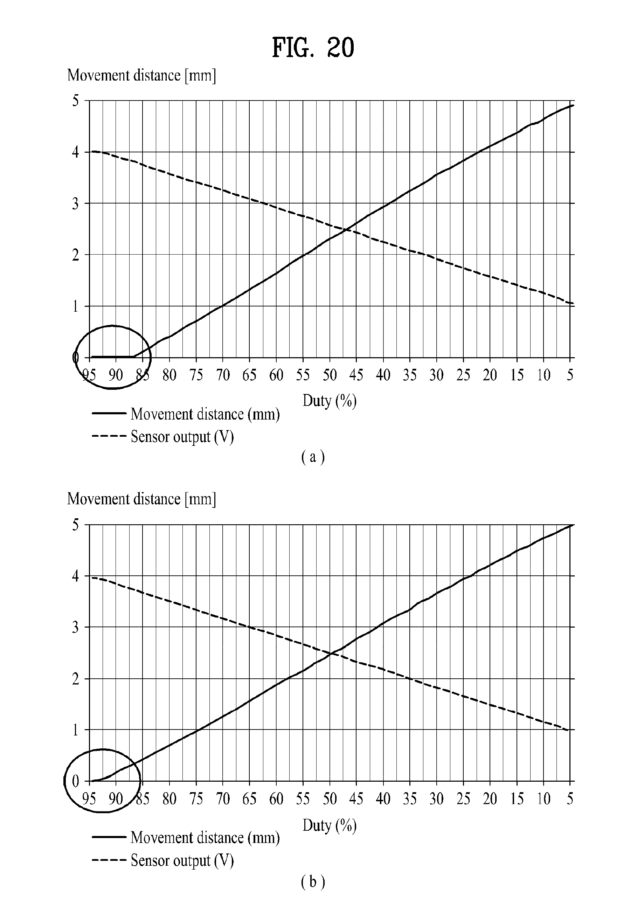

FIG. 20(a) is a graph showing a relationship between output voltage of a sensor and movement distance of the valve member 200 in the conventional EGR valve and FIG. 20(b) is a graph showing a relationship between output voltage of a sensor and movement distance of the valve member 220 in the EGR valve according to the embodiment of the present invention.

In the conventional art and the embodiment of the present invention, the sensor may be a hall sensor to sense change in magnetic force of a magnet mounted at the second gear constituting the power transmission unit. The hall sensor outputs the change in magnetic force of the magnet as a voltage value.

When the actuating cam is rotated, the output value of the hall sensor is continuously changed as shown in FIG. 20(a). However, the movement distance of the valve unit is not changed at the early stage and is changed after the lapse of a predetermined time.

That is, the output value of the hall sensor corresponds to the movement distance of the valve unit. In the above case, however, the output value of the hall sensor does not temporarily correctly correspond to the movement distance of the valve unit.

In the embodiment of the present invention, on the other hand, the contact roller is in contact with the upper wall of the guide groove of the actuating cam, and therefore, the movement distance of the valve unit is changed simultaneously when the actuating cam is rotated as shown in FIG. 20(b).

In the embodiment of the present invention, therefore, the output value of the sensor correctly corresponds to the movement distance of the valve unit. In addition, rotation of the actuating cam completely contributes to downward movement of the valve unit.

As is apparent from the above description, the embodiment of the present invention has an effect in that the pressure angle or the contact angle between the roller and the actuating cam is restricted.

When the pressure angle is restricted according to the embodiment of the present invention, the horizontal force component may be minimized and the vertical force component may be maximized. As a result, the follower of the actuating cam, i.e. the valve member, may be more effectively moved upward and downward.

Consequently, loss in force of the drive motor to rotate the actuating cam may be minimized and even when a motor having a smaller capacity than a conventional motor  is used, the same force may be provided to the valve member.

Meanwhile, in the embodiment of the present invention, the substantial actuation section of the actuating cam does not correspond to the entirety of the original cam curve but an extracted portion of the original cam curve.

Change in vertical displacement of the follower connected to the original cam curve includes non-linear change portions and a linear change portion. In the embodiment of the present invention, the linear change portion is extracted such that the extracted linear change portion corresponds to the actuation section of the actuating cam.

Consequently, it is possible to predictably adjust the opening degree of the exhaust gas flow channel and gas flow rate.

Also, in the embodiment of the present invention, the cooling fluid flow channel is provided in the housing to rapidly discharge heat transferred to the housing through the cooling fluid.

Specifically, the cooling fluid flow channel is disposed between the motor installation part and the exhaust gas flow channel. Consequently, it is possible to suppress or prevent heat generated from exhaust gas flowing along the exhaust gas flow channel from being transferred to the motor installation part.

In addition, the motor installation part, in which the drive motor is installed, and the valve unit are disposed in parallel. Consequently, it is possible to considerably reduce the length of the EGR valve in the forward and backward direction, thereby improving space efficiency of an engine compartment of a vehicle.

Furthermore, in the embodiment of the present invention, the contact roller of the valve unit remains in contact with the upper wall of the guide groove of the actuating cam. Consequently, the actuating cam pushes the contact roller such that the valve unit is moved downward simultaneously when the actuating cam is rotated.

As a result, rotation of the actuating cam completely contributes to downward movement of the valve unit.

Also, rotation of the actuating cam and downward movement of the valve unit are simultaneously carried out, and therefore, the output value of the sensor to sense the rotation of the actuating cam correctly corresponds to the movement distance of the valve unit.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

**Claims**

1. An exhaust gas recirculation (EGR) valve for vehicles comprising:

   a housing;
   a drive motor to generate power;
   a power transmission unit connected to the drive motor to transmit the power generated by the drive motor, the power transmission unit comprising a plurality of gears;
   a rotary shaft connected to one of the gears constituting the power transmission unit;
   an actuating cam connected to the rotary shaft so as to move in a rotational direction of the rotary shaft, the actuating cam having a guide groove formed therein; and
   a valve member operatively connected to the actuating cam to selectively open and close an exhaust gas flow channel provided in the housing according to operation of the actuating cam, one end of the valve member being in contact with a top of the guide groove of the actuating cam such that the valve member is operated simultaneously when the actuating cam is rotated.

2. The EGR valve according to claim 1, wherein
   the valve member is provided in the housing such that the valve member is moved upward and downward,
   the valve member comprises:

   a contact roller provided so as to contact the top of the guide groove of the actuating cam such that the contact roller is moved upward and downward according to rotation of the actuating cam;
   a valve stem at which the contact roller is rotatably installed; and
   a valve plate provided at a lower end of the valve stem to selectively open and close the exhaust gas flow channel provided in the housing, and
   in an initial state in which the power from the drive motor is not transmitted to the actuating cam via the power transmission unit, downward rotational force is applied to the actuating cam, thereby maintaining a contact state between the top of the guide groove and the contact roller.

3. The EGR valve according to claim 1 or 2, further comprising:

   an elastic restoring member provided between an inner wall of the housing and the power transmission unit to provide elastic restoring force, wherein
   the elastic restoring member provides force to push the actuating cam in a downward rotational direction in a state in which the power from the drive motor is not transmitted to the actuating cam via the power transmission unit,
   wherein the elastic restoring member comprises:

   a coil-shaped body provided between the inner wall of the housing and the power transmission unit;
   a first end installed in a support hole provided at one of the gears constituting the power transmission unit; and
   a second end installed in a support groove provided at the inner wall of the housing,

wherein the first end is formed in the shape of a hook,
the first end is caught by a portion of a wall of the support hole located in a direction corresponding to the downward rotational direction of the actuating cam, and
the support hole, in which the first end is supported, is provided at one side thereof with a catching protrusion to catch the first end.

4. The EGR valve according to claim 1, 2 or 3, wherein the housing comprises:

a first housing in which the motor installation part is provided and a second housing coupled to the first housing, the exhaust gas flow channel being provided in the second housing, and
a cooling fluid flow channel provided in the housing between the exhaust gas flow channel and the motor installation part to dissipate heat generated from the exhaust gas flow channel,
wherein the cooling fluid flow channel encloses the exhaust gas flow channel;
wherein the cooling fluid flow channel is located lower than the motor installation part and higher than the exhaust gas flow channel to suppress or prevent heat generated from exhaust gas passing though the exhaust gas flow channel from being transferred to the drive motor.

5. The EGR valve according to claim 4, wherein
the cooling fluid flow channel comprises: a first cooling fluid flow channel formed at a bottom of the first housing and a second cooling fluid flow channel formed at a top of the second housing, and
the first and second cooling fluid flow channels are disposed such that positions of the first and second cooling fluid flow channels correspond to each other to constitute the cooling fluid flow channel.

6. The EGR valve according to one of claims 1 to 5,
wherein
the drive motor is inserted and installed in the motor installation part,
the valve unit and the drive motor are connected to each other via the power transmission unit,
a motor shaft of the drive motor and the rotary shaft inserted in the actuating cam are disposed in opposite directions, and
the power transmission unit comprises: a pinion gear installed at the motor shaft; a first gear engaged with the pinion gear; and a second gear engaged with the first gear, the rotary shaft being inserted in a rotational center of the second gear;
wherein the first gear comprises a multiple layer gear having a first gear layer engaged with pinion gear and a second gear layer engaged with the second gear, the second gear layer having a smaller diameter than the first gear layer, and
the second gear comprises a single layer gear, which is provided at only a portion of an outer circumference thereof with gear teeth.

7. The EGR valve according to one of claims 1 to 6, wherein a contact position between the actuating cam and the valve member according to rotation of the actuating cam is linearly changed according to rotation of the actuating cam and a pressure angle of a contact point between the actuating cam and the valve member is changed within a predetermined range;
wherein the actuating cam comprises: a plate part; and a guide groove provided at the plate part, and
the guide groove corresponds to a portion of an original cam curve extending from a virtual vertical line vertically extending from a rotational center point of the actuating cam in a counterclockwise direction such that the original cam curve is gradually spaced apart from the rotational center point of the actuating cam, and
wherein the guide groove comprises:

an actuation section defining a contact position between the roller and the guide groove, the contact position being linearly changed; and
margin sections extending from a front end and a rear end of the actuation section.

8. The EGR valve according to claim 7, wherein the guide groove corresponds to a shape of the original cam curve in which a portion of a front end part and a portion of a rear end part of the original cam curve is omitted in a state in which the original cam curve is rotated by a predetermined angle in a clockwise direction.

9. The EGR valve according to claim 7 or 8, wherein a width of the original cam curve and a width of the guide groove correspond to a diameter of a circle tangent to the virtual vertical line vertically extending from the rotational center point and a basic circle of the original cam curve.

**10.** The EGR valve according to claim 7, 8 or 9, wherein a virtual contact position between the roller and the original cam curve according to rotation of the cut front end part of the original cam curve and a virtual contact position between the roller and the original cam curve according to rotation of the cut rear end part of the original cam curve are nonlinearly changed according to rotation of the original cam curve.

**11.** The EGR valve according to one of claims 7 to 10, wherein a vertical displacement of the valve unit moved according to rotation of the original cam curve is decided by the following equation.

$$y = h \left( \frac{\theta}{\beta} - \frac{1}{2\pi} \sin \frac{2\pi\theta}{\beta} \right)$$

where, h = maximum displacement
$\beta$ = size of ascent and descent sections
$\theta$ = quantity of rotation of cam in ascent and descent sections

$$0 \leq \frac{\theta}{\beta} \leq 1$$

**12.** The EGR valve according to one of claims 7 to 11, wherein coordinates ($^mC_x$, $^mC_y$) of a contact position between the roller and the guide groove of the actuating cam are decided by the following equation.

$$^mC_x = {}^fC_x \cos\theta_c + {}^fC_y \sin\theta_c$$

$$^mC_y = -{}^fC_x \sin\theta_c + {}^fC_y \cos\theta_c$$

where,

$$^fC_x = {}^fR_x + R_f \sin\psi$$

$$^fC_y = {}^fR_y - R_f \cos\psi$$

$^fR_x$ = eccentricity of roller on horizontal axis, $^fR_y$ = eccentricity of roller on vertical axis $R_f$ = radius of roller, and $\psi$ = contact angle (pressure angle) of roller

**13.** A method of designing and manufacturing an actuating cam of an EGR valve comprising: a plate part having a rotary shaft hole, in which a rotary shaft provided in a housing of the EGR valve is inserted; and a guide groove formed at the plate part such that a roller of a predetermined follower is inserted in the guide groove, the guide groove guiding movement of the roller, the method comprising:

setting an original cam curve extending from a virtual vertical line vertically extending from a rotational center point of the actuating cam in a counterclockwise direction such that the original cam curve is gradually spaced apart from the rotational center point of the actuating cam;
rotating the original cam curve by a predetermined angle in a clockwise direction;
extracting a portion of the original cam curve and forming the extracted shape at the plate part to form the guide groove, wherein

17

a contact position between the guide groove and the roller is linearly changed according to rotation of the actuating cam and a pressure angle of a contact point between the actuating cam and the roller is changed within a predetermined range.

14. The method according to claim 13, wherein
the guide groove corresponds to a shape of the original cam curve in which a portion of a front end part and a portion of a rear end part of the original cam curve is omitted.

15. The method according to claim 13 or 14, wherein the guide groove comprises: an actuation section in which the roller is movable; and margin sections extending from a front end and a rear end of the actuation section, and wherein a width of the original cam curve and a width of the guide groove correspond to a diameter of a circle tangent to the virtual vertical line vertically extending from the rotational center point and a basic circle of the original cam curve.

# FIG. 1

FIG. 2

FIG. 3

EP 2 650 524 A2

# FIG. 4

# FIG. 5

# FIG. 6

( a )                    ( b )

EP 2 650 524 A2

# FIG. 7

(a)

(b)

(c)

# FIG. 8

——— Position (Displacement)

----- Velocity

—-—-— Acceleration

# FIG. 9

# FIG. 10

ⓐ       ⓑ       ⓒ       ⓓ

Pressure
angle
(degrees)

Section having displacement of 2mm

12.7

Actuation section

0

90             Rotational angle
(degrees)

-12.7

-25.3

Initially set point

Graph showing change of pressure angle according to
rotational angle of original cam curve

# FIG. 11

400

420

421

3

411

410

405

( a )

420

421

3

411

410

412

( b )

# FIG. 12

( a )

( b )

## FIG. 13

# FIG. 14A

# FIG. 14B

## FIG. 15A

## FIG. 15B

## FIG. 16

# FIG. 17

(a)

(b)

(c)

(d)

# FIG. 18

( a )

( b )

( c )

( d )

FIG. 19

# FIG. 20

Movement distance [mm]

Duty (%)

—— Movement distance (mm)
- - - - Sensor output (V)

( a )

Movement distance [mm]

Duty (%)

—— Movement distance (mm)
- - - - Sensor output (V)

( b )

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120037994
- KR 1020120037995

- KR 1020120107007